# EUROPÄISCHE PATENTSCHRIFT

(11) **EP 1 703 170 B1**
(45) Veröffentlichungstag und Bekanntmachung des Hinweises auf die Patenterteilung: **17.10.2007**
(21) Anmeldenummer: 06002396.7
(22) Anmeldetag: 07.02.2006
(51) Int. Cl.: F16H 13/14

(54) **Brennkraftmaschine mit einem Riementrieb für Nebenaggregate**
Internal combustion engine with belt transmission for auxiliaries
Moteur à combustion interne avec transmission à courroie pour les appareils auxiliaires

(30) Priorität: 16.03.2005 DE 102005012006
(43) Veröffentlichungstag der Anmeldung: 20.09.2006
(73) Patentinhaber: Bayerische Motoren Werke Aktiengesellschaft, 80809 München (DE)
(72) Erfinder: Lemberger, Heinz, 85774 Unterföhring (DE)

(56) Entgegenhaltungen:
- EP-A- 1 464 870
- WO-A-20/04079229
- DE-A1- 2 113 533
- DE-A1- 10 236 746
- DE-U- 1 810 126
- US-A- 3 255 640
- US-A- 4 461 062
- US-A- 5 324 237

## Beschreibung

Die Erfindung bezieht sich auf eine Brennkraftmaschine mit einem Riementrieb, wobei mindestens ein Nebenaggregat mittels des Riementriebes über ein Treibrad einer Maschinenwelle, insbesondere Kurbelwelle, angetrieben ist, und ein weiteres Nebenaggregat mit einem Antriebsrad über ein mit der Außenseite des Riemens des Riementriebes reib- und formschlüssig zusammenwirkendes Reibrad in Antriebsverbindung steht.

Aus dem deutschen Gebrauchsmuster DE 1 810 126 U ist ein Reibradgetriebe für Hilfs- und Nebenantriebe von Fahrzeug-Brennkraftmaschinen bekannt, wobei ein von einem kurbelwellenseitigen Treibrad angetriebener Profilring von relativ großem Durchmesser über seine Innenseite zum reibschlüssigen Antrieb von Nebenaggregaten dient, die ggf. über zuschaltbare Zwischenreibräder angetrieben sind. Mit dieser Reibradanordnung soll sich ein Riementrieb für Nebenaggregate erübrigen.

Gegenstand des deutschen Patentes DE- PS 354 907 ist ein Reibrädergetriebe zum Antrieb eines Kühlerventilators, wobei eine auf einer maschinenseitig angetriebenen Nebenaggregate - Welle angeordnete Reibscheibe mit außenumfänglicher V- Rille mit einem entsprechend angepassten Gegenrad reib- und formschlüssig zusammenwirkt, und das Gegenrad in einer federbelasteten Schwinge gelagert ist zur sicheren Übertragung des Antriebsmomentes.

Weiter ist aus der deutschen Auslegeschrift DE 21 13 533 B ein Antrieb für eine Kühlmittelpumpe einer Brennkraftmaschine bekannt, bei der eine Nockenwelle von der Kurbelwelle über einen Zahnriemen angetrieben ist, wobei der Zahnriemen auf seiner Außenseite mit einem Poly-V-Profil ausgebildet ist zum reib- und formschlüssigen Eingriff in korrespondierende Außenumfangsrillen eines Antriebsrades der Kühlmittelpumpe, die zum Spannen für eine sichere Übertragung des Antriebsmomentes vom multifunktionellen Zahnriemen auf das Pumpen-Antriebsrad an der Brennkraftmaschine verschiebbar angeordnet ist.

Die zu Beginn der Beschreibungseinleitung angegebene Brennkraftmaschine mit einem Riementrieb, dessen Riemen außenseitig beaufschlagbar ist von einem Zwischen- Reibrad zur antreibenden Einwirkung auf ein Nebenaggregat-Antriebsrad ist Gegenstand der gattungsbildenden deutschen Offenlegungsschrift DE 102 36 746 A1. In diesem Dokument ist ohne zeichnerischen Beleg als eine Variante genannt die Verwendung eines Riemens mit einer längsprofilierten Außenseite zum formschlüssigen Zusammenwirken mit dem Zwischen-Reibrad, das mit dem Antriebsrad eines Nebenaggregates ebenfalls formschlüssig zusammenwirkt. Die längsprofilierte Außenseite kann aus dem Stand der Technik als ein Poly-V- Rillen-Profil interpretiert werden.

Zur Erzielung einer einwandfreien Übertragung von Antriebsmomenten vom Reibrad auf das Nebenaggregate- Antriebsrad ist es zur Vermeidung von Verschleiß der in zweckmäßiger Weise aus einem elastischen Material gebildeten Poly-V-Rillen notwendig, dass Reibrad und Antriebsrad mit ihren Rillen genau fluchtend zueinander angeordnet sind. Dies erfordert einen erheblichen Bauaufwand mit sehr kleinen Toleranzen.

Der Erfindung liegt die Aufgabe zugrunde, für den gattungsgemäßen Riementrieb mit einem Reibräder-Getriebe eine Anordnung aufzuzeigen, die unter Vermeidung kleiner Bauteil-Toleranzen in einfacher Weise ein sicheres Fluchten der miteinander in Reib-Eingriff stehenden Getriebe-Räder gewährleistet.

Diese Aufgabe ist mit dem Patentanspruch 1 dadurch gelöst, dass der Riemen außenseitig mit in Laufrichtung weisenden Rillen ausgebildet ist zum reib-und formschlüssigen Eingriff in am Umfang des Reibrades angeordneten Rillen, die mit am Außenumfang des Nebenaggregate- Antriebsrades vorgesehenen Rillen zusammenwirken, wobei das Antriebsrad oder/ und ein mit dem Antriebsrad drehfest verbundener Rillenträger jeweils relativ zum Reibrad axial beweglich angeordnet ist/sind.

Mit der erfindungsgemäß axial verschiebebeweglichen Anordnung des Nebenaggregate- Antriebsrades ist für dieses ein vorteilhaft selbsttätig fluchtendes Ausrichten zum antreibenden Reibrad erzielt mit dem weiteren Vorteil, dass das Antriebsrad auch seitwärts gerichteten Bewegungen eines beispielsweise an einem steuerbaren Lenkerarm angeordneten Reibrades unmittelbar folgen kann ohne Beschädigung der vorzugsweise aus einem elastischen Material gebildeten Rillen.

Eine auf baulich einfache Weise ein sicheres Fluchten der Getrieberäder gewährleistende Anordnung ist vorteilhafterweise dadurch erzielt, dass das Antriebsrad auf einer Welle des Nebenaggregates antriebsfest und axial zwischen wellenseitigen Anschlägen verschiebbar angeordnet ist.

Um einen Reibungseinfluss auf die axiale Verschiebbarkeit des Antriebsrades zu reduzieren, ist dieses mit einer aus einem Hart-Kunststoff gebildeten Nabe ausgerüstet. Damit ist ferner bei einer Anordnung der Nabe auf einer Stahlwelle auch ein korrosionsbedingtes Klemmen vermieden.

Zur vorteilhaften Übertragung hoher Antriebsmomente zwischen Reibrad und Nebenaggregat-Antriebsrad ist dieses wie auch ggf. das Reibrad am jeweiligen Außenumfang mit einem drehfest angeordneten Rillenträger aus einem Soft-Kunststoff ausgerüstet, der insbesondere im Hinblick auf minimalen Verschleiß gewählt ist.

Für ein in der Herstellung kostengünstiges und hinsichtlich der Funktionen der axialen Verschiebbarkeit einerseits und geringem Rillen-Verschleiß andererseits wird in weiterer Ausgestaltung der Erfindung vorgeschlagen, dass das als ein Blechpressteil topfartig gestaltete Antriebsrad am Außenumfang einen Rillenträger umfasst, der auf einem bandartigen, elastischen Ring von hoher Dehnkraft angeordnet ist, mittels dem der Rillenträger mit radialer Vorspannung auf dem zylindrischen Umfangsrand des topfartigen Antriebsrades antriebsfest angeordnet bzw.aufgezogen ist. Ferner ist damit ein gewichts- und festigkeitsmäßig optimiertes Antriebsrad erzielt.

Die vorbeschriebene Erfindung ermöglicht weiter in vorteilhafter Weise die Verwendung eines handelsüblichen Riemens mit innen- wie außenseitig vorgesehenen Poly-V-Rillen, wobei die Anzahl außenseitiger Rillen/Rippen des Riemens nicht auf das zu übertragende Antriebsmoment für das Reibräder-Getriebe beschränkt sein muss.

In Verbindung mit dem Umstand, dass das Reibrad mit einer Steuereinrichtung in Verbindung steht zur gesteuerten Unterbrechung der Antriebsverbindung von Reibrad und Antriebsrad ergibt sich mit einer höheren Anzahl an Rillen/ Rippen eine größere Übertragungsfläche, die sich vorteilhaft auswirkt bei z.B. durch Wasser, Schnee etc. bedingt schwierigen Umweltbedingungen.

Eine weitere Möglichkeit zum selbstausrichtenden Fluchten des Antriebsrades relativ zum Reibrad ist mit der Erfindung dadurch gegeben, dass der Rillenträger des Nebenaggregate- Antriebsrades auf einem festen Kunststoffring angeordnet ist, der über eine Innenverzahnung spielbehaftet mit einer tiefgezogenen Außenverzahnung des als Blechpressteiles gestalteten Antriebsrades antriebsfest verbunden ist, wobei der Kunststoffring als Rillenträger zwischen Anschlägen axial verschiebbar angeordnet ist. Diese Anordnung ermöglicht es , das Antriebsrad unverrückbar fest auf der Welle eines Nebenaggregates anzuordnen. Es können aber auch beide aufgezeigten axialen Verschiebungen von Antriebsrad relativ zur Aggregatewelle und Rillenträger relativ zum Antriebsrad miteinander kombiniert sein.

Die Erfindung ist anhand von in der Zeichnung dargestellten Beispielen erläutert. Es zeigt :
Fig.1 einen an einer nicht gezeigten Brennkraftmaschine vorgesehenen Riementrieb für Nebenaggregate,
Fig.2 ein mit einem Nebenaggregate- Antriebsrad verbindbares Nabenteil mit einer aus einem Hart-Kunststoff gebildeten Nabe zur axial beweglichen Lagerung auf einer Nebenaggregate- Welle,
Fig.3 eine weitere Ausführung für eine axiale Beweglichkeit mittels eines relativ zum Antriebs axial verschiebebweglichen Rillenträgers.

Eine nicht dargestellte Brennkraftmaschine ist mit einem Riementrieb 1 zum Antrieb dargestellter Nebenaggregate 2 und 3 ausgerüstet. Hierfür dient ein handelsüblicher Riemen 4, der innenseitig ein Poly-V-Profil aufweist, das mit einem korrespondierenden Profil am Außenumfang eines mit einer durch eine Achse 5 versinnbildlichten Kurbelwelle der Brennkraftmaschine drehfest verbundenen Triebrades 6 reib- und formschlüssig zusammenwirkt. Zwischen dem Triebrad 6 und dem nächst benachbarten Nebenaggregat 2 wirkt auf den Riemen 4 eine Spannrolle 7 ein, die über einen Schwenkarm 8 geführt ist, der von einer in einem Gehäuse 9 vorgespannt angeordneten, nicht gezeigten Drehstabfeder beaufschlagt ist.

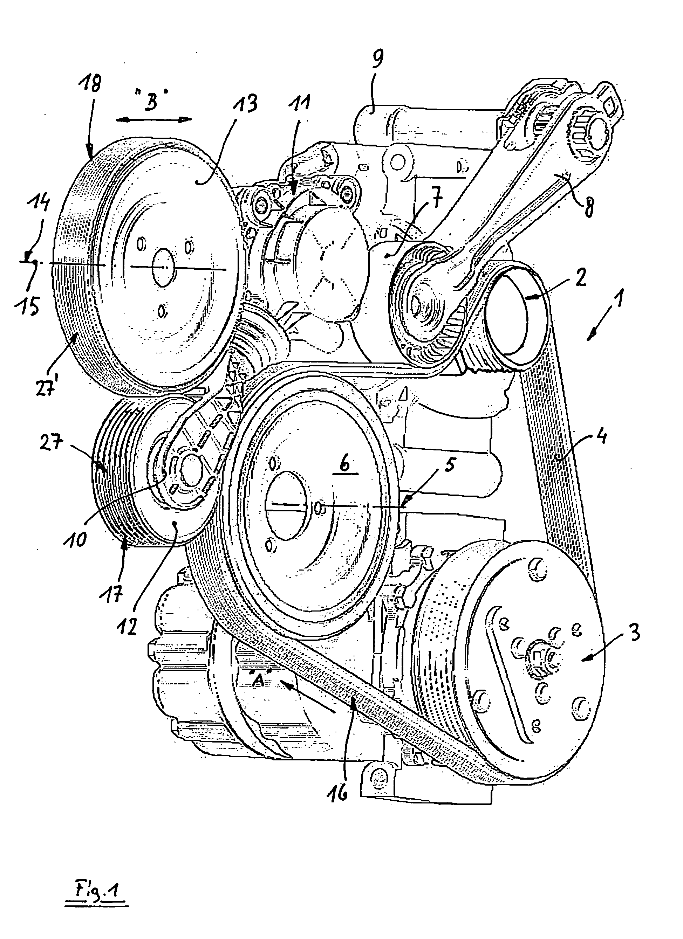

Wie aus Fig.1 weiter ersichtlich, ist der vorgenannte Riemen 4 auch außenseitig mit einem Poly-V-Profil ausgebildet. Dieses wirkt mit einem korrespondierenden Außenumfangs-Profil eines über einen Lenker 10 einer Steuereinrichtung 11 geführten Reibrades 12 reib- und formschlüssig zusammen. Das in einem vom Riemen 4 beaufschlagten Außenumfangsbereich des maschinenseitigen Triebrades 6 angeordnete und über den steuerbaren Lenker 10 in Umfangsrichtung des Triebrades 6 verstellbare Reibrad 12 dient zum wahlweisen, betriebspunktabhängigen Antrieb eines Antriebsrades 13 eines weiteren, mittels der Drehachse 14 versinnbildlichten, nicht gezeigten Nebenaggregates 15.

Die vorbeschriebene Anordnung zeigt, dass der Riemen 4 außenseitig mit in Laufrichtung gemäß Pfeil "A" weisenden Rillen bzw. Rippen 16 ausgebildet ist zum reib- und formschlüssigen Eingriff in am Umfang des Reibrades 12 angeordnete korrespondierende Rillen 17, die mit am Außenumfang des Nebenaggregat- Antriebsrades 13 vorgesehenen korrespondierenden Rillen 18 zusammenwirken, wobei mit den vorgenannten Rillen 16, 17 und 18 gegenüber einem außenseitig glatten Riemen eine relativ große Übertragungsfläche erzielt ist zur Übertragung höherer Antriebsmomente. Die Anzahl der Rippen 16,17,18 kann die für eine einwandfreie Momentenübertragung erforderliche Anzahl übersteigen.

Um eine einwandfreie Übertragung von Antriebsmomenten vom Reibrad 12 auf das Nebenaggregat- Antriebsrad 13 zu erzielen, ist es zur Vermeidung von Verschleiß der in zweckmäßiger Weise aus einem elastischen Material gebildeten Poly-V-Rillen notwendig, dass das Reibrad 12 und das Antriebsrad 13 mit ihren Rillen 17 und 18 genau fluchtend zueinander angeordnet sind.

Zur Vermeidung eines hierfür erforderlichen Bauaufwandes mit sehr kleinen Bauteil- Toleranzen ist erfindungsgemäß eine Anordnung getroffen, bei der das Antriebsrad 13 oder/ und ein mit dem Antriebsrad 13' drehfest verbundener Rillenträger 27', 27" jeweils relativ zum Reibrad 12 axial beweglich angeordnet ist bzw. sind. Mit dieser Anordnung ist in vorteilhaft einfacher Weise durch ein selbsttätiges Ausrichten ein sicheres Fluchten der miteinander in Reibeingriff stehenden Getriebe-Räder von Reibrad 12 und Antriebsrad 13 erzielt.

Für eine axial bewegliche Anordnung des Antriebsrades 13 relativ zum Reibrad 12 ist vorgesehen, das Antriebsrad 13 auf einer in Fig.2 abschnittsweise gezeigten Welle 20 des weiteren Nebenaggregates 15 antriebsfest und axial zwischen teilweise gezeigten wellenseitigen Anschlägen 21 verschiebbar anzuordnen. Zur Erzielung einer baulich einfachen Anordnung weist die Nebenaggregate- Welle 20 eine ebenflächige Abflachung 22 auf zur drehfesten Verbindung mit einer aus einem Hart-Kunststoff gebildeten Nabe 23 mit einer korrespondierenden Durchbrechung 24, die spielbehaftet die Welle 20 umschließt. Wie aus Fig.2 weiter ersichtlich, ist die Nabe 23 in einem Nabenträger 25 angeordnet, der über Schraubbolzen 26 mit dem Antriebsrad 13 verbindbar ist. Diese Anordnung gewährleistet, dass sich das Antriebsrad 13 mit seinen Rillen 18 bei Antriebs-Eingriff des Reibrades 12 in dessen Rillen 17 über die axiale Verschiebbarkeit selbsttätig ausrichtet und somit eine verschleißbehaftete Verformung der Rippen 17,18 mit verringerter Antriebsmomenten-Übertragung vermieden ist. Die Kunststoff- Nabe 23 kann aber auch unmittelbar in einer entsprechend gestalteten, insbesondere einstückig ausgeformten Aufnahme - nicht gezeigt - des Antriebsrades 13 angeordnet sein

Vorteilhaft ist ferner, dass das Antriebsrad 13 bei seitwärts gerichteten Bewegungen des über den Lenker 10 geführten Reibrades 12 unverzüglich folgen kann, und eine etwa daraus resultierende Beschädigung ebenfalls sicher vermieden ist. Für eine betriebssichere axiale Verschiebe-Beweglichkeit des Antriebsrades 13 auf der Nebenaggregate- Welle 20 vorteilhaft ist die gewählte Werkstoff-Kombination der Nabe 23 aus einem Hart-Kunststoff auf der Welle 20 aus Stahl, wobei ferner mittels gezielter Maßnahmen eine durch Korrosion oder Verschmutzung bedingte Erhöhung der Reibung zwischen Nabe 23 und Welle 20 vermeidbar ist.

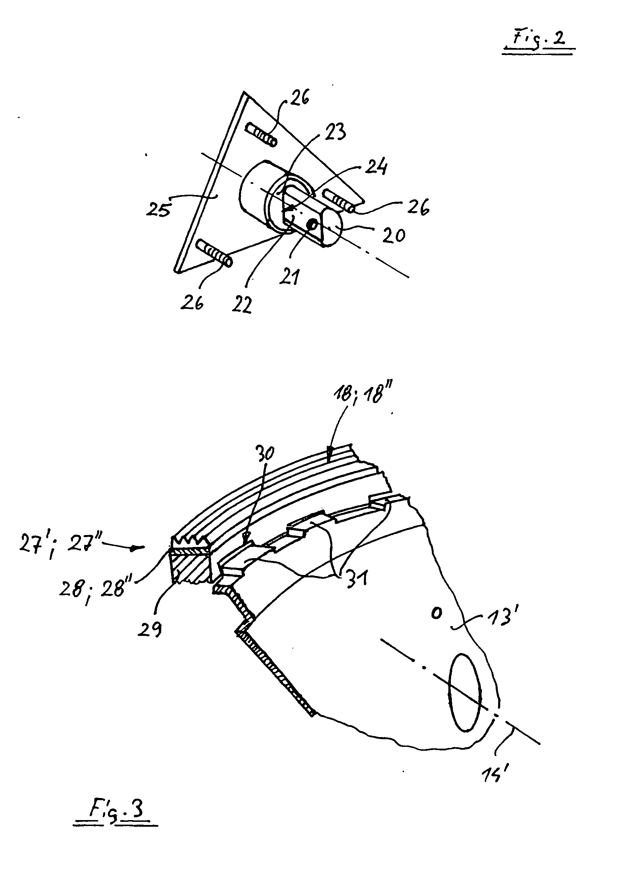

Zur Steigerung der Übertragungs-Leistung vom Reibrad 12 zum Antriebsrad 13 weisen beide jeweils einen drehfest angeordneten Rillenträger 27,27' aus einem Soft-Kunststoff auf, wie er beispielsweise aus Fig.3 für einen Rillenträger 27" ersichtlich ist. Jeder Rillenträger 27,27'bzw. 27" ist auf einem bandartigen, insbesondere armierten und elastischen Ring 28,28" von hoher Dehnkraft aufgebracht, mittels dem der Rillenträger 27' mit radialer Vorspannung auf einem zylindrischen Umfangsrand eines als Blechpressteil topfartig gestalteten Antriebsrades 13 -- Fig.1-- antriebsfest angeordnet bzw. aufgezogen ist. Die vorbeschriebene Gestaltung bietet eine vorteilhaft einfache Montage und auch Demontage bei z.B. etwa verschlissenem Ringträger.

Ein weiteres Ausführungsbeispiel einer axialen Bewegung seitens eines Antriebsrades 13' relativ zum Reibrad 12 ist in Fig.3 aufgezeigt, wobei ein Rillenträger 27" des Nebenaggregate - Antriebsrades 13' auf einem festen Kunststoffring 29, der über eine Innenverzahnung 30 mit einer tiefgezogenen Außenverzahnung 31 eines als Blechpressteil gestalteten Antriebsrades 13' antriebsfest verbunden ist, wobei der Kunststoffring 29 mit dem Rillenträger 27" zwischen - nicht gezeigten - Anschlägen axial verschiebbar angeordnet ist.

Beim vorgenannten Ausführungsbeispiel nach Fig.3 kann der Rillenträger 27" auch ohne Zwischenschaltung des Ringes 28" direkt auf dem Kunststoffring 29 angeordnet sein, z.B mittels Kleben.

Für beide vorbeschriebenen Ausführungsbeispiele kann das Reibrad 12 relativ zum Riemen 4 im Lenker 10 axial beweglich gelagert sein. Mit der Erfindung lassen sich neben den durch Bauteiltoleranzen möglichen Fluchtungsfehlern zwischen Reibrad 12 und Antriebsrad 13,13' auch durch unterschiedliche Wärmedehnungen bedingte Fluchtungsfehler kompensieren, was insbesondere bei einem als Kühlmittel- bzw. Wasserpumpe gewählten Nebenaggregat 15 vorteilhaft ist.

Zur Reduzierung von Verschleiß bei zusammenwirkenden Rillenträgern 27, 27' bzw. 27, 27" von Reibrad 12 und Antriebsrad 13 bzw. 13' können spitze Rippen des einen Rillenträgers mit gering bis stark verrundeten Rippen des anderen Rillenträgers zur reib - und formschlüssigen Antriebsübertragung ineinander greifen.

Für einen Wechsel des Riemens 4 wird das Reibrad 12 außer Eingriff mit dem Antriebsrad 13 gesteuert und die Spannrolle 7 über den Schwenkarm 8 unter Verwendung eines hebelartigen Werkzeuges vom Riemen 4 entfernt, wobei der Schwenkarm 8 in der entfernten Position verriegelt gehalten ist.

## Patentansprüche

1. Brennkraftmaschine mit einem Riementrieb für Nebenaggregate, wobei mindestens ein Nebenaggregat (2,3) mittels des Riementriebes (1) über ein Triebrad (6) einer Maschinenwelle (Kurbelwelle 5) angetrieben ist, und ein weiteres Nebenaggregat (15) mit einem Antriebsrad (13) über ein mit der Außenseite des Riemens (4) des Riementriebes (1) reib- und formschlüssig zusammenwirkendes Reibrad (12) in Antriebsverbindung steht,
**dadurch gekennzeichnet,**
**dass** der Riemen (4) außenseitig mit in Laufrichtung weisenden Rillen (16) ausgebildet ist zum reib- und formschlüssigen Eingriff in am Umfang des Reibrades (12) angeordneten Rillen (17), die mit am Außenumfang des Nebenaggregate-Antriebsrades (13) vorgesehenen Rillen (18) zusammenwirken, wobei dieses Antriebsrad (13) oder/ und ein mit diesem Antriebsrad (13) drehfest verbundener Rillenträger (27, 27', 27") jeweils relativ zum Reibrad (12, Pfeil "B") axial beweglich angeordnet ist/ sind.

2. Riementrieb nach Anspruch 1, **dadurch gekennzeichnet, dass** das Antriebsrad (13) auf einer Welle (20) des weiteren Nebenaggregates (15) antriebsfest und axial zwischen wellenseitigen Anschlägen (21) verschiebbar angeordnet ist.

3. Riementrieb nach Anspruch 2, **dadurch gekennzeichnet, dass** das Antriebsrad (13) mit einer aus einem Hart-Kunststoff gebildeten Nabe (23) ausgerüstet ist.

4. Riementrieb nach den Ansprüchen 1-3, **dadurch gekennzeichnet, dass** ein am Außenumfang des Antriebsrades (13) und/oder des Reibrades (12) drehfest angeordneter Rillenträger (27',27) aus einem Soft-Kunststoff gebildet ist.

5. Riementrieb nach Anspruch 4, **dadurch gekennzeichnet, dass** das als ein Blechpressteil topfartig gestaltete Antriebsrad (13) am Außenumfang einen Rillenträger (27') umfasst, der auf einem bandartigen, elastischen Ring (28) von hoher Dehnkraft angeordnet ist, mittels dem der Rillenträger (27') mit radialer Vorspannung auf dem zylindrischen Umfangrand des topfartigen Antriebsrades (13) antriebsfest angeordnet ist.

6. Riementrieb nach den Ansprüchen 1-5, **dadurch gekennzeichnet, dass** ein handelsüblicher Riemen (4) mindestens außenseitig mit Poly-V- Rillen (16) versehen ist, die in korrespondierende Rillen (17) des Reibrades (12) reib - und formschlüssig eingreifen, und die Rillen (17) des Reibrades (12) mit korrespondierenden Rillen (18) des Antriebsrades (13) antriebsschlüssig zusammenwirken.

7. Riementrieb nach den Ansprüchen 1-6, **dadurch gekennzeichnet, dass** das Reibrad (12) mit einer Steuereinrichtung (11) in Verbindung steht zur gesteuerten Unterbrechung der Antriebsverbindung von Reibrad (12) und Antriebsrad (13, 13') des weiteren Nebenaggregates (15), das insbesondere eine Kühlmittelpumpe ist.

8. Riementrieb nach Anspruch 1 und 5, **dadurch gekennzeichnet, dass** ein Rillenträger (27") des Nebenaggregate- Antriebsrades (13') auf einem festen Kunststoffring (29) angeordnet ist, der über eine Innenverzahnung (30) spielbehaftet mit einer tiefgezogenen Außenverzahnung (31) eines als Blechpressteiles gestalteten Antriebsrades (13') antriebsfest verbunden ist, wobei der Kunststoffring (29) als Rillenträger (27") zwischen Anschlägen axial verschiebbar angeordnet ist.

## Claims

1. An internal combustion engine with a belt drive for auxiliary units, wherein at least one auxiliary unit (2.3) is driven by the belt drive (1) via a drive wheel (6) on an engine shaft (crankshaft 5) and an additional auxiliary unit (15) is in drive connection via a friction gear (12) frictionally and positively co-operating with the outside of the belt (4) of the belt drive (1),
**characterised in that**
the outside of the belt (4) is formed with grooves (16) in the running direction for frictional and positive engagement in grooves (17) on the periphery of the friction gear (12) and co-operating with grooves (18) on the outer periphery of the auxiliary-unit driving gear (13), wherein the driving gear (13) and/or a groove holder (27, 27', 27") co-rotatably connected to the driving gear (13) is axially movable relative to the friction gear (1 2, arrow B).

2. A belt drive according to claim 1, **characterised in that** the driving gear (13) is mounted on a shaft (20) of the additional auxiliary unit (15) so as to be fixed to the drive and axially movable between stops (21) on the shaft.

3. A belt drive according to claim 2, **characterised in that** the driving gear (13) has a hub (23) made of hard plastics material.

4. A belt drive according to claims 1 - 3, **characterised in that** a groove holder (27', 27) co-rotatably disposed on the outer periphery of the driving gear (13) and/or of the friction gear (12) is made of soft plastics material.

5. A belt drive according to claim 4, **characterised in that** the driving gear (13), which is a pot-shaped sheet-metal extruded part, has a groove holder (27') on its outer periphery and mounted on a highly stretchable elastic band or ring (28), by means of which the groove holder (27') is mounted with radial prestress on the cylindrical peripheral edge of the pot-like driving gear (13) and fixed to the drive.

6. A belt drive according to claims 1 - 5, **characterised in that** a conventional commercial belt (4) is formed at least on the outside with poly-V grooves (16) which frictionally and positively engage in corresponding grooves (17) in the friction gear (12), and the grooves (17) on the friction gear (12) cooperate in a drive connection with corresponding grooves (18) on the driving gear (13).

7. A belt drive according to claims 1-6, **characterised in that** the friction gear (12) is connected to a control device (11) for controlled breaking of the drive connection between the friction gear (12) and the driving gear (13, 13') of the additional auxiliary unit (15), which especially is a coolant pump.

8. A belt drive according to claims 1 and 5, **characterised in that** a groove holder (27") on the auxiliary-unit driving gear (13') is disposed on a fixed plastics material ring (29) fixed to the drive and connected via internal teeth (30) with clearance to deep-drawn external teeth (31) on a driving gear (13') in the form of a sheet-metal extruded part, wherein the plastics material ring (29) and the groove holder (27") are axially movable between stops.

## Revendications

1. Moteur à combustion interne comportant un entraînement par courroie pour des équipements auxiliaires, selon lequel au moins un équipement auxiliaire (2, 3) est entraîné par une transmission à courroie (1) à partir d'une roue motrice (6) d'un arbre du moteur (vilebrequin 5) et un autre équipement auxiliaire (15) coopère dans le sens de l'entraînement avec une roue motrice (13) par une roue à friction (12) coopérant avec la face extérieure de la courroie (4) de la transmission par courroie (1) par une liaison par frottement et par la forme,
**caractérisé en ce que**
la face extérieure de la courroie (4) comporte des cannelures (16) dirigées dans la direction de circulation pour coopérer par une prise par frottement et par la forme avec des cannelures (17) prévues à la périphérie de la roue de friction (12), ces cannelures coopérant avec les cannelures (18) prévues à la périphérie extérieure de la roue d'entraînement (13) de l'équipement auxiliaire,
cette roue d'entraînement (13) et/ou un support de cannelures (27, 27', 27") reliés solidairement à cette roue d'entraînement (13) est/sont mobiles axialement par rapport à la roue à friction (12, flèche « B »).

2. Entraînement par courroie selon la revendication 1,
**caractérisé en ce que**
la roue d'entraînement (13) est installée solidairement à l'entraînement sur un arbre (20) de l'autre équipement auxiliaire (15) et peut coulisser axialement entre des butées (21) du côté de l'arbre.

3. Entraînement par courroie selon la revendication 2,
**caractérisé en ce que**
la roue d'entraînement (13) est équipée d'un moyeu (23) en matière plastique dure.

4. Entraînement par courroie selon l'une des revendications 1 à 3,
**caractérisé en ce qu'**
un support de cannelures (27', 27) solidaire en rotation à la périphérie extérieure de la roue d'entraînement (13) et/ou de la roue à friction (12) est réalisé en une matière plastique molle.

5. Transmission à courroie selon la revendication 4,
**caractérisée en ce que**
la roue d'entraînement (13) en forme de pot constitué comme pièce en tôle emboutie, comprend à sa périphérie extérieure un support de cannelures (27') prévu sur une bague élastique (28) en forme de bandage, à forte force d'extension, à l'aide duquel le support de cannelures (27') est installé avec précontrainte radiale sur le bord périphérique cylindrique de la roue d'entraînement (13) en forme de pot (monté solidairement à l'entraînement).

6. Transmission à courroie selon l'une des revendications 1 à 5,
**caractérisée en ce qu'**
une courroie (4) du commerce comporte au moins sur son côté extérieur des cannelures multiples en V (16), pénétrant par une liaison par frottement et par la forme dans des cannelures correspondantes (17) de la roue à friction (12) et les cannelures (17) de la roue à friction (12) coopèrent dans le sens de l'entraînement avec des cannelures correspondantes (18) de la roue d'entraînement (13).

7. Transmission à courroie selon l'une des revendications 1 à 6,
**caractérisée en ce que**
la roue d'entraînement (12) coopère avec une installation de commande (11) pour interrompre de façon commandée la liaison d'entraînement de la roue à friction (12) et de la roue d'entraînement (13, 13') de l'autre équipement auxiliaire (15) qui est notamment une pompe d'agent de refroidissement.

8. Transmission à courroie selon les revendications 1 et 5,
**caractérisée en ce qu'**
un support de cannelures (27") de la roue d'entraînement (13') de l'équipement auxiliaire est installé sur une bague de matière plastique solide (29) reliée solidairement à l'entraînement par une denture intérieure (30), avec du jeu sur une denture extérieure (31) obtenue par emboutissage profond d'une roue d'entraînement (13') en forme de pièce en tôle comprimée, la bague en matière plastique (29) étant installée comme support de cannelures (27") pour coulisser axialement entre les butées.
